# DEMANDE DE BREVET EUROPEEN

(11) **EP 2 116 399 A2**
(43) Date de publication de la demande: **11.11.2009**
(21) Numéro de dépôt: 09009088.7
(22) Date de dépôt: 27.09.2005
(51) Int. Cl.: B60C 23/20

(54) **Procédé d'aide à la conduite d'un véhicule et procédé d'estimation des propriétés d'adhérence d'un pneumatique**

(30) Priorité: 29.09.2004 FR 0410325
(62) Demande divisionnaire de: 05801494.5
(71) Demandeur: Société de Technologie MICHELIN, 63000 Clermont-Ferrand (FR); MICHELIN Recherche et Technique S.A., 1763 Granges-Paccot (CH)
(72) Inventeur: Prost, Pascal, 63200 Riom (FR)
(74) Mandataire: Le Cam, Stéphane Georges Elie

(57) **Abrégé**

L'invention concerne un procédé d'aide à la conduite d'un véhicule comportant des ensembles montés pneumatiques/roues.

Selon l'invention, les pneumatiques (1) intègrent au moins un dispositif (7), fixé au sein de la masse caoutchouteuse de la bande de roulement (5) et mesurant la température interne de ladite masse caoutchouteuse de la bande de roulement, un signal traduisant la température du point de fixation dudit dispositif (7) étant transmis à un dispositif opérateur et le dispositif opérateur informant le conducteur et/ou régulant la puissance et/ou le couple et/ou la vitesse du véhicule.

## Description

La présente invention concerne un pneumatique destiné à équiper un véhicule et plus particulièrement destiné à équiper un véhicule à deux roues tel qu'une motocyclette. L'invention concerne encore un procédé d'estimation des propriétés d'adhérence d'un pneumatique et un procédé d'aide à la conduite d'un tel véhicule.

Bien que non limité à une telle application, l'invention sera plus particulièrement décrite en référence à un tel pneumatique de motocyclette, ou moto.

L'armature de renforcement ou renforcement des pneumatiques et notamment des pneumatiques de motocyclette est à l'heure actuelle - et le plus souvent - constituée par empilage d'une ou plusieurs nappes désignées classiquement « nappes de carcasse », «nappes sommet », etc. Cette façon de désigner les armatures de renforcement provient du procédé de fabrication, consistant à réaliser une série de produits semi-finis en forme de nappes, pourvues de renforts filaires souvent longitudinaux, qui sont par la suite assemblées ou empilées afin de confectionner une ébauche de pneumatique. Les nappes sont réalisées à plat, avec des dimensions importantes, et sont par la suite coupées en fonction des dimensions d'un produit donné. L'assemblage des nappes est également réalisé, dans un premier temps, sensiblement à plat. L'ébauche ainsi réalisée est ensuite mise en forme pour adopter le profil toroïdal typique des pneumatiques. Les produits semi-finis dits « de finition » sont ensuite appliqués sur l'ébauche, pour obtenir un produit prêt pour la vulcanisation.

Un tel type de procédé "classique" implique, en particulier pour la phase de fabrication de l'ébauche du pneumatique, l'utilisation d'un élément d'ancrage (généralement une tringle), utilisée pour réaliser l'ancrage ou le maintien de l'armature de carcasse dans la zone des bourrelets du pneumatique. Ainsi, pour ce type de procédé, on effectue un retournement d'une portion de toutes les nappes composant l'armature de carcasse (ou d'une partie seulement) autour d'une tringle disposée dans le bourrelet du pneumatique. On crée de la sorte un ancrage de l'armature de carcasse dans le bourrelet.

La généralisation dans l'industrie de ce type de procédé classique, malgré de nombreuses variantes dans la façon de réaliser les nappes et les assemblages, a conduit l'homme du métier à utiliser un vocabulaire calqué sur le procédé ; d'où la terminologie généralement admise, comportant notamment les termes «nappes», «carcasse», «tringle», «conformation» pour désigner le passage d'un profil plat à un profil toroïdal, etc.

Il existe aujourd'hui des pneumatiques qui ne comportent à proprement parler pas de «nappes» ou de «tringles» d'après les définitions précédentes. Par exemple, le document EP 0 582 196 décrit des pneumatiques fabriqués sans l'aide de produits semi-finis sous forme de nappes. Par exemple, les éléments de renforcement des différentes structures de renfort sont appliqués directement sur les couches adjacentes de mélanges caoutchouteux, le tout étant appliqué par couches successives sur un noyau toroïdal dont la forme permet d'obtenir directement un profil s'apparentant au profil final du pneumatique en cours de fabrication. Ainsi, dans ce cas, on ne retrouve plus de «semi-finis», ni de «nappes», ni de «tringle». Les produits de base, tels que les mélanges caoutchouteux et les éléments de renforcement sous forme de fils ou filaments, sont directement appliqués sur le noyau. Ce noyau étant de forme toroïdale, on n'a plus à former l'ébauche pour passer d'un profil plat à un profil sous forme de tore.

Par ailleurs, les pneumatiques décrits dans ce document ne disposent pas du "traditionnel" retournement de nappe carcasse autour d'une tringle. Ce type d'ancrage est remplacé par un agencement dans lequel on dispose de façon adjacente à ladite structure de renfort de flanc des fils circonférentiels, le tout étant noyé dans un mélange caoutchouteux d'ancrage ou de liaison.

Il existe également des procédés d'assemblage sur noyau toroïdal utilisant des produits semi-finis spécialement adaptés pour une pose rapide, efficace et simple sur un noyau central. Enfin, il est également possible d'utiliser un mixte comportant à la fois certains produits semi-finis pour réaliser certains aspects architecturaux (tels que des nappes, tringles, etc), tandis que d'autres sont réalisés à partir de l'application directe de mélanges et/ou d'élément de renforcement.

Dans le présent document, afin de tenir compte des évolutions technologiques récentes tant dans le domaine de la fabrication que pour la conception de produits, les termes classiques tels que «nappes», «tringles», etc, sont avantageusement remplacés par des termes neutres ou indépendants du type de procédé utilisé. Ainsi, le terme «renfort de type carcasse» ou «renfort de flanc» est valable pour désigner les éléments de renforcement d'une nappe carcasse dans le procédé classique, et les éléments de renforcement correspondants, en général appliqués au niveau des flancs, d'un pneumatique produit selon un procédé sans semi-finis. Le terme «zone d'ancrage», pour sa part, peut désigner tout autant le "traditionnel" retournement de nappe carcasse autour d'une tringle d'un procédé classique, que l'ensemble formé par les éléments de renforcement circonférentiels, le mélange caoutchouteux et les portions adjacentes de renfort de flanc d'une zone basse réalisée avec un procédé avec application sur un noyau toroïdal.

La direction longitudinale du pneumatique, ou direction circonférentielle, est la direction correspondant à la périphérie du pneumatique et définie par la direction de roulement du pneumatique.

Un plan circonférentiel ou plan circonférentiel de coupe est un plan perpendiculaire à l'axe de rotation du pneumatique. Le plan équatorial est le plan circonférentiel passant par le centre ou sommet de la bande de roulement.

La direction transversale ou axiale du pneumatique est parallèle à l'axe de rotation du pneumatique.

Un plan radial contient l'axe de rotation du pneumatique.

Comme dans le cas de tous les autres pneumatiques, on assiste à une radialisation des pneumatiques pour motos, l'architecture de tels pneumatiques comprenant une armature de carcasse formée d'une ou deux couches d'éléments de renforcement faisant avec la direction circonférentielle un angle pouvant être compris entre 65° et 90°, ladite armature de carcasse étant radialement surmontée d'une armature de sommet formée au moins d'éléments de renforcement généralement textiles. Il subsiste toutefois des pneumatiques non radiaux auquel se rapporte également l'invention. L'invention se rapporte encore à des pneumatiques partiellement radiaux, c'est-à-dire dont les éléments de renforcement de l'armature de carcasse sont radiaux sur au moins une partie de ladite armature de carcasse, par exemple dans la partie correspondant au sommet du pneumatique.

De nombreuses architectures d'armature de sommet ont été proposées, selon que le pneumatique sera destiné à la monte à l'avant de la moto ou à la monte à l'arrière. Une première structure consiste, pour ladite armature de sommet, à employer uniquement des câbles circonférentiels, et ladite structure est plus particulièrement employée pour la position arrière. Une deuxième structure, directement inspirée des structures couramment employées en pneumatiques pour véhicules de Tourisme, a été utilisée pour améliorer la résistance à l'usure, et consiste dans l'utilisation d'au moins deux couches de sommet de travail d'éléments de renforcement parallèles entre eux dans chaque couche mais croisés d'une couche à la suivante en faisant avec la direction circonférentielle des angles aigus, de tels pneumatiques étant plus particulièrement adaptés pour l'avant des motos. Les dites deux couches de sommet de travail peuvent être associées à au moins une couche d'éléments circonférentiels, généralement obtenus par enroulement hélicoïdal d'une bandelette d'au moins un élément de renforcement enrobé de caoutchouc.

Le choix des architectures de sommet des pneumatiques intervient directement sur certaines propriétés des pneumatiques telles que l'usure, l'endurance, l'adhérence ou bien encore le confort en roulage ou dans les cas notamment des motocyclettes la stabilité. Toutefois d'autres paramètres des pneumatiques tels que la nature des mélanges caoutchouteux constituant la bande de roulement interviennent également sur les propriétés dudit pneumatique. Le choix et la nature des mélanges caoutchouteux constituant la bande de roulement sont par exemple des paramètres essentiels concernant les propriétés d'usure. Le choix et la nature des mélanges caoutchouteux constituant la bande de roulement interviennent également sur les propriétés d'adhérence du pneumatique.

Par ailleurs, il est également connu de l'homme du métier que les propriétés physico-chimiques des mélanges caoutchouteux varient en fonction de la température et donc que la température a une influence sur les propriétés de la bande de roulement d'un pneumatique.

L'invention a pour but de fournir un procédé d'aide à la conduite d'un véhicule permettant d'optimiser l'usage du véhicule en fonction des propriétés d'adhérence de la bande de roulement dudit pneumatique.

Ce but a été atteint selon l'invention un procédé d'aide à la conduite d'un véhicule, notamment pour la conduite de moto, selon lequel, les pneumatiques intègrent au moins un dispositif fixé au sein de la masse caoutchouteuse de la bande de roulement et mesurant la température interne de ladite masse caoutchouteuse de la bande de roulement, un signal traduisant la température du point de fixation dudit système est transmis à un dispositif opérateur et le dispositif opérateur informe le conducteur et/ou régule la puissance, le couple et/ou la vitesse du véhicule.

Le procédé ainsi proposé selon l'invention selon lequel un pneumatique intègre un dispositif de mesure de la température de la masse caoutchouteuse de la bande de roulement va permettre d'obtenir des informations sur les propriétés du pneumatique telles que notamment sa capacité à se déformer qui influe directement sur l'adhérence du pneumatique. Ces informations mises à disposition du conducteur ou pilote peuvent lui permettre de modifier son comportement de conduite et l'utilisation qu'il fait du véhicule ou plus exactement des pneumatiques. Le positionnement au sein de la masse caoutchouteuse permet au dispositif de mesure de donner très précisément la valeur de la température du mélange caoutchouteux qui conditionne les propriétés du matériau.

Un tel procédé selon l'invention permet à tout moment d'apporter des informations éventuellement transmises au pilote et d'autoriser un type de pilotage ou bien au contraire de corriger le pilotage du véhicule pour l'adapter aux caractéristiques d'adhérence des bandes de roulement ou tout au moins d'une partie des parties des bandes de roulement des pneumatiques au contact du sol.

Le procédé d'aide à la conduite d'un véhicule selon l'invention est comme énoncé précédemment plus particulièrement avantageux lorsqu'il équipe une moto, l'équilibre, la stabilité et donc le pilotage d'un tel véhicule étant directement dépendants de l'adhérence des pneumatiques. De la même façon une diminution de l'adhérence d'un pneumatique sur une moto est une information fondamentale pour le pilote.

Selon une première variante de réalisation de l'invention, le signal traduisant la température du point de fixation dudit système est transmis par un capteur de température sans fil, par exemple interrogeable par onde radio et avantageusement associé à une antenne radio au sein de la masse caoutchouteuse et une antenne radio sur le véhicule.

Selon un deuxième mode de réalisation de l'invention, le signal traduisant la température du point de fixation dudit système est transmis par connexion au travers d'un moyeu tournant.

Un mode de réalisation particulièrement avantageux de l'invention prévoit que la mesure de température, la transmission du signal et l'information et/ou régulations sont effectuées avant le roulage du véhicule. Selon ce mode de réalisation, le pilote du véhicule peut recevoir ces informations avant de rouler et savoir l'utilisation qu'il peut faire de son véhicule.

Une autre réalisation avantageuse de l'invention prévoit que la mesure de température, la transmission du signal et l'information et/ou régulations sont effectuées pendant le roulage du véhicule. Selon cette réalisation, le pilote du véhicule peut recevoir ces informations en cours de roulage et savoir l'utilisation qu'il peut faire de son véhicule.

Des variantes de réalisation du procédé d'aide à la conduite selon l'invention prévoit que les informations concernant la température sont transmises au dispositif opérateur qui régule la conduite du véhicule par exemple en limitant la puissance, le couple et/ou la vitesse de celui-ci.

Une variante de l'invention, notamment pour une régulation du véhicule en cours de roulage, prévoit que le dispositif opérateur reçoit une mesure complémentaire de la température de la surface extérieure du pneumatique et de préférence une mesure de la température de la surface de contact du pneumatique avec le sol. Cette seconde mesure de température apporte un complément d'information sur les propriétés de la bande de roulement et sur l'adhérence de celle-ci.

L'invention propose également une utilisation d'au moins un système de mesure de température, tel que ceux évoqués précédemment, au sein de la matière caoutchouteuse constituant la bande de roulement d'un pneumatique équipant un véhicule pour aider à la conduite dudit véhicule, ledit système de mesure étant fixé au sein de la masse caoutchouteuse de la bande de roulement.

Selon une première variante de réalisation de l'invention, le système de mesure de température est utilisé avant le roulage du véhicule.

Selon une deuxième variante de réalisation de l'invention, le système de mesure de température est utilisé pendant le roulage du véhicule.

L'invention propose également un procédé d'estimation des propriétés d'adhérence d'un pneumatique pour la mise en oeuvre du procédé d'aide à la conduite d'un véhicule tel que décrit précédemment consistant à mesurer la température interne de la bande de roulement avec au moins un dispositif de mesure de la température fixé au sein de la masse caoutchouteuse de la bande de roulement dudit pneumatique.

La mesure de la température interne de la bande de roulement ne conduit effectivement qu'à une estimation de l'adhérence, d'autres caractéristiques telles que notamment la température de la surface de la bande de roulement étant nécessaire pour déterminer plus précisément l'adhérence du pneumatique.

Selon une première variante de réalisation de l'invention, l'estimation des propriétés d'adhérence est effectuée avant le roulage du véhicule.

Selon une deuxième variante de réalisation de l'invention, l'estimation des propriétés d'adhérence est effectuée pendant le roulage du véhicule.

L'invention propose aussi une utilisation d'au moins un dispositif de mesure de la température fixé au sein de la masse caoutchouteuse de la bande de roulement d'un pneumatique pour estimer les propriétés d'adhérence dudit pneumatique.

Selon une première variante de réalisation de l'invention, le dispositif de mesure de température est utilisé avant le roulage du véhicule.

Selon une deuxième variante de réalisation de l'invention, le dispositif de mesure de température est utilisé pendant le roulage du véhicule.

Conformément à l'invention, un pneumatique du véhicule comportant au moins une structure de renfort de type carcasse, formée d'éléments de renforcement, ancrée de chaque côté du pneumatique à un bourrelet dont la base est destinée à être montée sur un siège de jante, chaque bourrelet se prolongeant radialement vers l'extérieur par un flanc, les flancs rejoignant radialement vers l'extérieur une bande de roulement les bourrelets, les flancs et la bande de roulement étant constitués pour partie de masses caoutchouteuses, comporte au moins un dispositif de mesure de la température interne d'une masse caoutchouteuse de la bande de roulement, ledit dispositif étant un système fixé au sein de la masse caoutchouteuse, de la bande de roulement.

Selon une première variante de réalisation, le système émet un signal traduisant la température du point de fixation dudit système. Une telle réalisation est particulièrement avantageuse puisqu'elle permet de transmettre les informations relatives à la température sans nécessiter de connexion filaire.

Selon cette première variante de réalisation, le système de mesure de la température est par exemple un capteur de température sans fil, par exemple interrogeable par onde radio. Un tel système est avantageusement associé à une antenne radio au sein de la masse caoutchouteuse et une antenne radio sur le véhicule pour établir une liaison radio entre un interrogateur et le capteur. Un tel système est en outre avantageusement apte à fonctionner sans être associée à une source d'énergie, telle qu'une pile, présente au sein de la masse caoutchouteuse, ladite source d'énergie pouvant être associée à l'interrogateur placé sur le véhicule.

Selon une deuxième variante de réalisation, le système est connecté à un moyeu tournant pour transmettre un signal traduisant la température du point de fixation dudit système. Une telle connexion peut permettre l'alimentation du capteur et la transmission du signal par le moyeu tournant jusqu'à un dispositif de traitement dudit signal positionné sur le véhicule.

Les pneumatiques pour moto sont réalisés avec un taux de courbure le plus souvent supérieur à 0,2 pour être utilisé en carrossage. Il s'avère donc que selon l'utilisation de la moto, soit en ligne droite, soit en courbe, la partie de la bande de roulement au contact du sol n'est pas la même.

Une réalisation avantageuse prévoit ainsi que le pneumatique comporte au moins trois dispositifs de mesure de la température interne de la masse caoutchouteuse de la bande de roulement.

Selon cette réalisation avantageuse et lorsque les dispositifs de mesure de la température sont répartis selon la direction axiale du pneumatique, il est ainsi possible de connaître la température de la masse caoutchouteuse de la bande de roulement au contact du sol.

De façon à faciliter la mise en place du ou des dispositifs de mesure de la température, le pneumatique est avantageusement réalisé selon une technique de fabrication du type sur noyau dur ou forme rigide telle qu'évoquée précédemment.

Un tel pneumatique qui comme énoncé précédemment est avantageusement réalisé selon une technique du type sur noyau dur ou toroïdal autorise notamment la mise en place des dispositifs de mesure de la température dans une position quasi-finale, une étape de conformation n'étant pas requise selon ce type de procédé, ladite position finale pouvant en outre être parfaitement identifiée. En effet, la fabrication du type sur noyau dur peut permettre d'insérer un dispositif de mesure de la température selon une indexation prédéterminée.

La structure de renfort de type carcasse comporte avantageusement des éléments de renforcement faisant avec la direction circonférentielle un angle compris entre 65° et 90°.

Entre la structure de renfort de type carcasse et la bande de roulement, le pneumatique comporte encore une architecture d'armature de sommet.

Des architectures d'armature de sommet usuelle pour des pneumatiques moto varient, selon que le pneumatique sera destiné à la monte à l'avant de la moto ou à la monte à l'arrière. Une première structure consiste, pour ladite armature de sommet, à employer uniquement des câbles circonférentiels, et ladite structure est plus particulièrement employée pour la position arrière. Une deuxième structure, directement inspirée des structures couramment employées en pneumatiques pour véhicules de Tourisme, a été utilisée pour améliorer la résistance à l'usure, et consiste dans l'utilisation d'au moins deux couches de sommet d'éléments de renforcement parallèles entre eux dans chaque couche mais croisés d'une couche à la suivante en faisant avec la direction circonférentielle des angles aigus, de tels pneumatiques étant plus particulièrement adaptés pour l'avant des motos. Les dites deux couches de sommet peuvent être surmontées radialement d'au moins une couche d'éléments circonférentiels.

Selon une réalisation préférée, la structure de renforcement de sommet du pneumatique comporte au moins deux couches d'éléments de renforcement telles que d'une couche à la suivante les éléments de renforcement forment entre eux des angles compris entre 20 et 160° et de préférence entre 40 et 100°.

Selon une réalisation préférée, les éléments de renforcement des couches de travail sont en matériau textile.

De préférence également, les éléments de renforcement d'une couche d'éléments de renforcement circonférentiels sont métalliques et/ou textiles et/ou en verre. Le pneumatique peut encore comporter des éléments de renforcement de natures différentes dans une même couche d'éléments de renforcement circonférentiels.

De préférence encore, les éléments de renforcement de la couche d'éléments de renforcement circonférentiels présentent un module d'élasticité supérieur à 6000 N/mm².

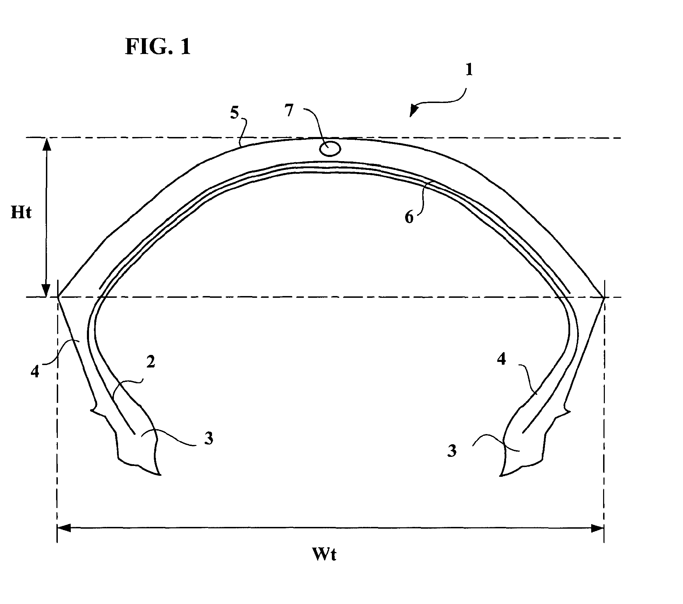

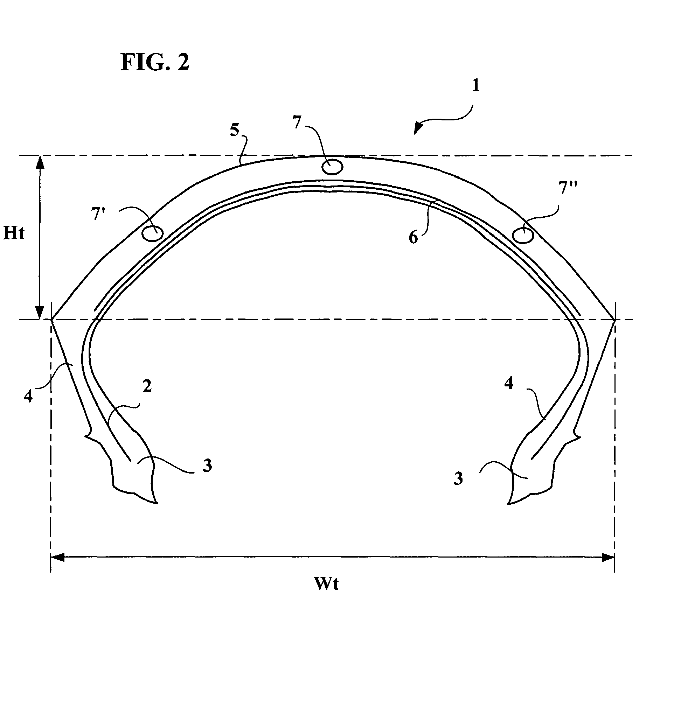

D'autres détails et caractéristiques avantageux de l'invention ressortiront ci-après de la description des exemples de réalisation de l'invention en référence aux figures 1 et 2 qui représentent :
- figure 1, une vue méridienne d'un schéma d'un pneumatique selon un premier mode de réalisation pour la mise en oeuvre de l'invention,
- figure 2, une vue méridienne d'un schéma d'un pneumatique selon un deuxième mode de réalisation pour la mise en oeuvre de l'invention.

Les figures 1 et 2 ne sont pas représentées à l'échelle pour en simplifier la compréhension.

La figure 1 représente un pneumatique 1 comprenant une armature de carcasse constituée d'une seule couche 2 comprenant des éléments de renforcement de type textile. La couche 2 est constituée d'éléments de renforcement disposés radialement. Le positionnement radial des éléments de renforcement est défini par l'angle de pose desdits éléments de renforcement ; une disposition radiale correspond à un angle de pose desdits éléments par rapport à la direction longitudinale du pneumatique compris entre 65° et 90°.

Ladite couche de carcasse 2 est ancrée de chaque côté du pneumatique 1 dans un bourrelet 3 dont la base est destinée à être montée sur un siège de jante. Chaque bourrelet 3 est prolongé radialement vers l'extérieur par un flanc 4, ledit flanc 4 rejoignant radialement vers l'extérieur la bande de roulement 5. Le pneumatique 1 ainsi constitué présente une valeur de courbure supérieure à 0.15 et de préférence supérieure à 0.3. La valeur de courbure est définie par le rapport Ht/Wt, c'est-à-dire par le rapport de la hauteur de la bande de roulement sur la largeur maximale de la bande de roulement du pneumatique. La valeur de courbure sera avantageusement comprise entre 0.25 et 0.5 pour un pneumatique destiné à être monté à l'avant d'une motocyclette et elle sera avantageusement comprise entre 0.2 et 0.5 pour un pneumatique destiné à être monté à l'arrière.

Le pneumatique 1 comporte encore une armature de sommet 6, dont le détail n'est pas représenté sur les figures. Comme énoncé précédemment, l'armature de sommet peut comporter au moins une couche d'éléments de renforcement parallèles entre eux et faisant avec la direction circonférentielle des angles aigus et/ou une couche d'éléments de renforcement circonférentiels. Dans le cas de l'armature de sommet d'un pneumatique comportant au moins deux couches d'éléments de renforcement faisant avec la direction circonférentielle des angles aigus lesdits éléments de renforcement sont croisés d'une couche à la suivante en faisant entre eux des angles compris 40 et 100°.

Conformément à l'invention, le pneumatique comporte un dispositif 7 de mesure de la température interne de la masse caoutchouteuse de la bande de roulement 5. Ce dispositif de mesure 7 est par exemple un capteur de température sans fil, par exemple interrogeable par onde radio et avantageusement associé à une antenne radio au sein de la masse caoutchouteuse et une antenne radio sur le véhicule ; le détail de réalisation n'est pas représenté sur les figures. Ce type de capteur présente l'avantage de ne pas nécessiter d'alimentation ; il renseigne sur la température de la masse caoutchouteuse qui l'entoure en modifiant une onde qu'il reçoit et retransmet.

Selon cette réalisation, il n'est donc pas nécessaire de prévoir des conducteurs filaires pour relier le capteur à un dispositif opérateur qui reçoit le signal émis par le capteur.

Le dispositif opérateur qui reçoit le signal émis par le capteur, l'analyse et communique des informations au pilote ou bien agit directement sur le véhicule.

Le pilote bénéficie ainsi d'une aide à la conduite qui lui indique ou bien lui impose les limites d'utilisation du véhicule. Cette information devient bien entendu un outil de sécurité notamment dans le cas du pilotage d'une moto où la connaissance du potentiel d'adhérence des pneumatiques peut par exemple prévenir une chute lors d'utilisation du pneumatique en carrossage dans des courbes. Le pilote peut alors avantageusement adapter sa vitesse, la puissance et/ou le couple utilisé en fonction de la température de la masse caoutchouteuse de la bande de roulement.

Un autre avantage de l'invention peut encore être de limiter l'usure des pneumatiques par une utilisation mieux adaptée à leur état à un instant donné.

La figure 1 ne représente qu'un seul dispositif 7 de mesure de la température au sein de la bande de roulement 5. Selon d'autres variantes de réalisation de l'invention, il peut être prévu une répartition de plusieurs dispositifs de mesure de la température au sein de la bande de roulement sur la périphérie de celle-ci.

La figure 2 illustre un second mode de réalisation de l'invention plus particulièrement adapté au cas d'une moto. Le pneumatique comporte selon ce mode de réalisation au moins trois dispositifs 7, 7', 7" de mesure de la température interne de la masse caoutchouteuse de la bande de roulement 5 et répartis sur la largeur axiale de la bande de roulement 5.

Le premier dispositif 7 de mesure de la température est mis en place dans la zone du plan équatorial du pneumatique 1 et permet de donner des informations quant à la température interne de la partie de la bande de roulement 5 au contact du sol lorsque la moto suit une trajectoire rectiligne.

Les deux autres dispositifs 7' et 7'' de mesure de la température sont mis en place dans les parties axialement extérieures de la bande de roulement 5 du pneumatique 1 et permettent chacun de donner des informations quant à la température interne d'une partie axialement extérieure de la bande de roulement 5 au contact du sol lorsque la moto suit une trajectoire en courbe, le pneumatique 1 étant alors utilisé en carrossage.

Comme dans le cas de la figure 1, des variantes de réalisation de l'invention prévoient une répartition de plusieurs dispositifs de mesure de la température au sein de la bande de roulement sur la périphérie de celle-ci.

Quel que soit le type de réalisation selon l'invention, les données relatives à la température mesurées au sein de la bande de roulement par chacun des dispositifs de mesure sont transmises à un dispositif opérateur. Ce dispositif opérateur comporte avantageusement un système de traitement des données de type logiciel qui va permettre de définir une instruction prenant en compte les données issues de chacun des pneumatiques et dans le cas d'une moto issues des pneumatiques avant et arrière. Le dispositif opérateur définit ainsi de manière permanente à intervalle prévu des instructions d'aide au pilotage.

L'instruction est alors soit transmise au pilote du véhicule qui va pouvoir adapter son mode pilotage, soit directement transmise à un processeur qui limite les capacités du véhicule par exemple en termes de puissance, de couple et/ou de vitesse. Une telle instruction est notamment particulièrement pertinente en cours de roulage mais elle peut également s'avérer utile avant roulage pour assurer un début de roulage du véhicule dans les meilleures conditions.

Le véhicule équipé de tels pneumatiques peut encore comporter tel qu'évoqué précédemment des capteurs de température de la surface du pneumatique. Il s'agit par exemple de capteur infrarouge. L'apport de ces données complémentaires relatives à la température de surface de la bande de roulement des pneumatiques complètent les informations et peut permettre encore d'améliorer la conduite du véhicule.

## Revendications

1. Procédé d'aide à la conduite d'un véhicule comportant des ensembles montés pneumatiques/roues, **caractérisé en ce que** les pneumatiques intègrent au moins un dispositif, fixé au sein de la masse caoutchouteuse de la bande de roulement et mesurant la température interne de ladite masse caoutchouteuse de la bande de roulement, **en ce qu'**un signal traduisant la température du point de fixation dudit dispositif est transmis à un dispositif opérateur et **en ce que** le dispositif opérateur informe le conducteur et/ou régule la puissance et/ou le couple et/ou la vitesse du véhicule.

2. Procédé d'aide à la conduite d'un véhicule selon la revendication 1, **caractérisé en ce que** le signal traduisant la température du point de fixation dudit système est transmis par un capteur de température sans fil, par exemple interrogeable par onde radio et associé à une antenne radio au sein de la masse caoutchouteuse et une antenne radio sur le véhicule.

3. Procédé d'aide à la conduite d'un véhicule selon la revendication 1, **caractérisé en ce que** le signal traduisant la température du point de fixation dudit système est transmis par connexion au travers d'un moyeu tournant.

4. Procédé d'aide à la conduite d'un véhicule selon l'une des revendications 1 à 3, **caractérisé en ce que** la mesure de température, la transmission du signal et l'information et/ou régulations sont effectuées avant le roulage du véhicule.

5. Procédé d'aide à la conduite d'un véhicule selon l'une des revendications 1 à 3, **caractérisé en ce que** la mesure de température, la transmission du signal et l'information et/ou régulations sont effectuées pendant le roulage du véhicule.

6. Procédé d'aide à la conduite d'un véhicule selon l'une des revendications 1 à 5, **caractérisé en ce que** le dispositif opérateur reçoit une mesure de température de la surface extérieure du pneumatique et de préférence une mesure de la température de la surface de contact du pneumatique avec le sol.

7. Utilisation d'au moins un système de mesure de température au sein de la matière caoutchouteuse constituant la bande de roulement d'un pneumatique équipant un véhicule pour aider à la conduite dudit véhicule, ledit système de mesure étant fixé au sein de la masse caoutchouteuse de la bande de roulement.

8. Utilisation d'au moins un système de mesure de température selon la revendication 7 avant le roulage du véhicule.

9. Utilisation d'au moins un système de mesure de température selon la revendication 7 pendant le roulage du véhicule.

10. Utilisation d'au moins un système de mesure de température selon l'une des revendication 7 à 9 pour un véhicule motorisé à deux roues tel qu'une motocyclette.

11. Procédé d'estimation des propriétés d'adhérence d'un pneumatique pour la mise en oeuvre du procédé d'aide à la conduite d'un véhicule selon l'une des revendications 1 à 6 consistant à mesurer la température interne de la bande de roulement avec au moins un dispositif de mesure de la température fixé au sein de la masse caoutchouteuse de la bande de roulement dudit pneumatique.

12. Utilisation d'au moins un dispositif de mesure de la température fixé au sein de la masse caoutchouteuse de la bande de roulement d'un pneumatique pour estimer les propriétés d'adhérence dudit pneumatique pour la mise en oeuvre du procédé d'aide à la conduite d'un véhicule selon l'une des revendications 1 à 6.
